# EUROPEAN PATENT APPLICATION

(11) **EP 3 502 839 A1**
(43) Date of publication of application: **26.06.2019**
(21) Application number: 17210462.2
(22) Date of filing: 22.12.2017
(51) Int. Cl.: G06F 3/01, G06F 3/0481, G06F 3/0484

(54) **METHODS, APPARATUS, SYSTEMS, COMPUTER PROGRAMS FOR ENABLING MEDIATED REALITY**

(71) Applicant: Nokia Technologies Oy, 02610 Espoo (FI)
(72) Inventor: Laaksonen, Lasse Juhani, Tampere Tampere (FI); Cricri, Francesco, 33100 Tampere (FI); Lehtiniemi, Arto Juhani, 33880 Lempäälä (FI); Mate, Sujeet Shyamsundar, 33720 Tampere (FI)
(74) Representative: Swindell & Pearson Limited

(57) **Abstract**

A method, an apparatus and a computer program are provided. The method comprises defining a first mapping that maps a virtual space to a real space; using a tracked real point of view of a user in the real space and the first mapping to determining a virtual point of view of the user within the virtual space defined by the user's virtual location and virtual orientation; causing rendering to the user of at least part of a virtual scene determined by the virtual point of view of the user within the virtual space, while the virtual space is mapped to the real space using the first mapping; altering, based on a grasp and move gesture performed by the user on a virtual location in the virtual space that differs from the virtual location partially defining the user's virtual point of view, the mapping of the virtual space to the real space from the first mapping to a second mapping; using a tracked real point of view of the user in the real space and the second mapping to determine a virtual point of view of the user within the virtual space defined by the user's virtual location and virtual orientation; and causing rendering to the user of at least part of a virtual scene determined by the virtual point of view of the user within the virtual space, while the virtual space is mapped to the real space using the second mapping.

## Description

### TECHNOLOGICAL FIELD

Embodiments of the present invention relate to methods, apparatus, systems, computer programs for enabling mediated reality.

### BACKGROUND

Mediated reality allows a user to visually experience a fully or partially artificial environment (a virtual space) as a virtual scene at least partially rendered by an apparatus to a user. The virtual scene is determined by a point of view of a user within the virtual space. The point view of the user depends upon a virtual location of the user and a virtual orientation of the user.

First-person perspective mediation means that user's real point of view within a real space determines the point of view of the user within the virtual space, changing the virtual scene. The virtual orientation of the user depends on the real orientation of the user. A variation in the user's real orientation determines a variation in the virtual orientation of the user within the virtual space.

In some but not necessarily all examples, the virtual location of the user depends on the real location of the user. A variation in the user's real location determines a variation in the virtual location of the user within the virtual space.

The mediated reality may be user interactive. User interactive means that user actions in the real space at least partially determine what happens within the virtual space.

It will therefore be appreciated that the ability to explore a virtual space may be limited when variation in a virtual location of the user depends on the real location of the user, because variation of the real location of the user is constrained, for example, by room boundaries and/or real objects.

### BRIEF SUMMARY

According to various, but not necessarily all, examples of the disclosure there is provided an apparatus, comprising: at least one processor; memory storing computer program code configured, working with the at least one processor, to cause the apparatus to at least: define a first mapping that maps a virtual space to a real space; use a tracked real point of view of a user in the real space and the first mapping to determine a virtual point of view of the user within the virtual space defined by the user's virtual location and virtual orientation; cause rendering to the user of at least part of a virtual scene determined by the virtual point of view of the user within the virtual space, while the virtual space is mapped to the real space using the first mapping; alter, based on a grasp and move gesture performed by the user on a virtual location in the virtual space that differs from the virtual location partially defining the user's virtual point of view, the mapping of the virtual space to the real space from the first mapping to a second mapping; use a tracked real point of view of the user in the real space and the second mapping to determine a virtual point of view of the user within the virtual space defined by the user's virtual location and virtual orientation; and cause rendering to the user of at least part of a virtual scene determined by the virtual point of view of the user within the virtual space, while the virtual space is mapped to the real space using the second mapping.

According to various, but not necessarily all, examples of the disclosure there is provided a method, comprising: defining a first mapping that maps a virtual space to a real space; using a tracked real point of view of a user in the real space and the first mapping to determine a virtual point of view of a user within the virtual space defined by the user's virtual location and virtual orientation; causing rendering to the user of at least part of a virtual scene determined by the virtual point of view of the user within the virtual space, while the virtual space is mapped to the real space using the first mapping; altering, based on a grasp and move gesture performed by the user on a virtual location in the virtual space that differs from the virtual location partially defining the user's virtual point of view, the mapping of the virtual space to the real space from the first mapping to a second mapping; using a tracked real point of view of the user in the real space and the second mapping to determine a virtual point of view of the user within the virtual space defined by the user's virtual location and virtual orientation; and causing rendering to the user of at least part of a virtual scene determined by the virtual point of view of the user within the virtual space, while the virtual space is mapped to the real space using the second mapping.

According to various, but not necessarily all, examples of the disclosure there is provided computer program code that, when executed by at least one processor, causes at least the following to be performed: defining a first mapping that maps a virtual space to a real space; using a tracked real point of view of a user in the real space and the first mapping to determine a virtual point of view of a user within the virtual space defined by the user's virtual location and virtual orientation; causing rendering to the user of at least part of a virtual scene determined by the virtual point of view of the user within the virtual space, while the virtual space is mapped to the real space using the first mapping; altering, based on a grasp and move gesture performed by the user on a virtual location in the virtual space that differs from the virtual location partially defining the user's virtual point of view, the mapping of the virtual space to the real space from the first mapping to a second mapping; using a tracked real point of view of the user in the real space and the second mapping to determine a virtual point of view of the user within the virtual space defined by the user's virtual location and virtual orientation; and causing rendering to the user of at least part of a virtual scene determined by the virtual point of view of the user within the virtual space, while the virtual space is mapped to the real space using the second mapping.

According to various, but not necessarily all, examples of the disclosure there is provided an apparatus, comprising: means for defining a first mapping that maps a virtual space to a real space; means for using a tracked real point of view of a user in the real space and the first mapping to determine a virtual point of view of a user within the virtual space defined by the user's virtual location and virtual orientation; means for causing rendering to the user of at least part of a virtual scene determined by the virtual point of view of the user within the virtual space, while the virtual space is mapped to the real space using the first mapping; means for altering, based on a grasp and move gesture performed by the user on a virtual location in the virtual space that differs from the virtual location partially defining the user's virtual point of view, the mapping of the virtual space to the real space from the first mapping to a second mapping; means for using a tracked real point of view of the user in the real space and the second mapping to determine a virtual point of view of the user within the virtual space defined by the user's virtual location and virtual orientation; and means for causing rendering to the user of at least part of a virtual scene determined by the virtual point of view of the user within the virtual space, while the virtual space is mapped to the real space using the second mapping.

According to various, but not necessarily all, examples of the disclosure there is provided an apparatus, comprising: at least one processor; memory storing computer program code configured, working with the at least one processor, to cause the apparatus to at least: define a first mapping that maps a virtual space to a real space; use a tracked real point of view of a user in the real space and the first mapping to determine a virtual point of view of the user within the virtual space defined by the user's virtual location and virtual orientation; cause rendering to the user of at least part of a virtual scene determined by the virtual point of view of the user within the virtual space, while the virtual space is mapped to the real space using the first mapping; alter the mapping of the virtual space to the real space from the first mapping to a second mapping, wherein the second mapping is a rotation of the first mapping about a virtual location in the virtual space that differs from the virtual location partially defining the user's virtual point of view; use a tracked real point of view of the user in the real space and the second mapping to determine a virtual point of view of the user within the virtual space defined by the user's virtual location and virtual orientation; and cause rendering to the user of at least part of a virtual scene determined by the virtual point of view of the user within the virtual space, while the virtual space is mapped to the real space using the second mapping.

According to various, but not necessarily all, examples of the disclosure there is provided a method, comprising: defining a first mapping that maps a virtual space to a real space; using a tracked real point of view of a user in the real space and the first mapping to determine a virtual point of view of the user within the virtual space defined by the user's virtual location and virtual orientation; causing rendering to the user of at least part of a virtual scene determined by the virtual point of view of the user within the virtual space, while the virtual space is mapped to the real space using the first mapping; altering the mapping of the virtual space to the real space from the first mapping to a second mapping, wherein the second mapping is a rotation of the first mapping about a virtual location in the virtual space that differs from the virtual location partially defining the user's virtual point of view; using a tracked real point of view of the user in the real space and the second mapping to determine a virtual point of view of the user within the virtual space defined by the user's virtual location and virtual orientation; and
causing rendering to the user of at least part of a virtual scene determined by the virtual point of view of the user within the virtual space, while the virtual space is mapped to the real space using the second mapping.

According to various, but not necessarily all, examples of the disclosure there is provided computer program code that, when executed by at least one processor, causes at least the following to be performed: defining a first mapping that maps a virtual space to a real space; using a tracked real point of view of a user in the real space and the first mapping to determine a virtual point of view of the user within the virtual space defined by the user's virtual location and virtual orientation; causing rendering to the user of at least part of a virtual scene determined by the virtual point of view of the user within the virtual space, while the virtual space is mapped to the real space using the first mapping; altering the mapping of the virtual space to the real space from the first mapping to a second mapping, wherein the second mapping is a rotation of the first mapping about a virtual location in the virtual space that differs from the virtual location partially defining the user's virtual point of view; using a tracked real point of view of the user in the real space and the second mapping to determine a virtual point of view of the user within the virtual space defined by the user's virtual location and virtual orientation; and causing rendering to the user of at least part of a virtual scene determined by the virtual point of view of the user within the virtual space, while the virtual space is mapped to the real space using the second mapping.

According to various, but not necessarily all, examples of the disclosure there is provided and apparatus, comprising: means for defining a first mapping that maps a virtual space to a real space; using a tracked real point of view of a user in the real space and the first mapping to determine a virtual point of view of the user within the virtual space defined by the user's virtual location and virtual orientation; means for causing rendering to the user of at least part of a virtual scene determined by the virtual point of view of the user within the virtual space, while the virtual space is mapped to the real space using the first mapping; means for altering the mapping of the virtual space to the real space from the first mapping to a second mapping, wherein the second mapping is a rotation of the first means for mapping about a virtual location in the virtual space that differs from the virtual location partially defining the user's virtual point of view; means for using a tracked real point of view of the user in the real space and the second mapping to determine a virtual point of view of the user within the virtual space defined by the user's virtual location and virtual orientation; and means for causing rendering to the user of at least part of a virtual scene determined by the virtual point of view of the user within the virtual space, while the virtual space is mapped to the real space using the second mapping.

The following portion of this 'Brief Summary' section, describes various features that may be features of any of the embodiments described in the foregoing portion of the 'Brief Summary' section. The description of a function should additionally be considered to also disclose any means suitable for performing that function.

The grasp and move gesture may comprise a grasping user input and followed by movement of at least one arm of the user. The second mapping may depend upon at least one of a magnitude and a direction of the movement of the at least one arm of the user. The grasping user input may cause the user to grasp the virtual location in the virtual space that differs from the virtual location partially defining the user's virtual point of view. The grasping user input may be performed while the virtual space is mapped to the real space using the first mapping.

The grasping user input may be performed by the user on a virtual visual object at the virtual location in the virtual space that differs from the virtual location partially defining the user's virtual point of view, while the virtual space is mapped to the real space using the first mapping.

The alteration of the mapping of the virtual space to the real space from the first mapping to the second mapping may be performed by moving the virtual space relative to the real space while the user performs the grasp and move gesture.

The real space may comprise a real space boundary. Some of the virtual space may be mapped to real space inside the real space boundary. Some of the virtual space may be mapped to real space outside the real space boundary.

At least part of the virtual visual object may be mapped to real space within the real space boundary. The virtual visual object may be mapped to real space outside the real space boundary.

At least a portion of the virtual space that is mapped to a portion of the real space outside the real space boundary in the first mapping may be mapped to a portion of the real space inside the real space boundary in the second mapping.

The second mapping may be a rotation of the first mapping about the virtual location that differs from the virtual location partially defining the user's virtual point of view.

The visual virtual object may be mapped to real space in the first mapping. At least part of the mapping of the visual virtual object to real space may remain unaltered when the mapping of the virtual space to the real space is altered from the first mapping to the second mapping.

The computer program code may be stored on a (non-transitory) computer readable medium.

According to various, but not necessarily all, embodiments of the invention there is provided examples as claimed in the appended claims.

### BRIEF DESCRIPTION OF FIGURES

For a better understanding of various examples that are useful for understanding the detailed description, reference will now be made by way of example only to the accompanying drawings in which:
Figures 1A-1C and 2A-2C illustrate examples of mediated reality in which figures 1A, 1B, 1C illustrate, from a common top perspective, the same virtual visual space and different points of view and figures 2A, 2B, 2C illustrate a virtual visual scene from the perspective of the respective points of view;
fig. 3A illustrates an example of a real space and Fig 3B illustrates an example of a real visual scene;
fig. 4 illustrates, from a top perspective, an example of a sound space 90 that corresponds to the virtual visual space;
fig. 5 illustrates an example of an apparatus that is operable to enable mediated reality and/or augmented reality and/or virtual reality;
fig. 6A illustrates an example of a method for enabling mediated reality and/or augmented reality and/or virtual reality;
fig. 6B illustrates an example of a method for updating a model of the virtual visual space for augmented reality;
figures 7A and 7B illustrate examples of apparatus that enable display of at least parts of the virtual visual scene to a user;
fig. 8 illustrates a block diagram of a method;
figs 9A to 9E illustrate examples of mapping virtual space to real space;
figs 10A to 10D illustrate a remapping of virtual space to real space taking place;
fig. 11A illustrates a perspective view of two users in both real space and virtual space;
fig. 11B illustrates a plan view of Fig. 11A;
fig. 12 illustrates the how a representation of a first user, in virtual space, to a second user while virtual space is being remapped to real space local to the first user;
fig. 13A illustrates a perspective view of a user in a subspace/room of real space;
fig. 13B illustrates a plan view of fig. 13A;
fig. 14A illustrates a user performing a grasping user input of a grasp and move gesture on a virtual object located at a virtual location;
fig. 14B illustrates a user moving his arm(s) as part of the grasp and move gesture on the virtual object illustrated in fig. 14A; and
figs. 15A and 15B illustrate an implementation in which user location is not tracked and the user's virtual location transitioning between predefined locations in virtual space.

### DEFINITIONS

a "point of view" is a perspective from a particular location and a particular orientation in space;
"artificial environment" may be something that has been recorded or generated.

"virtual visual space" refers to fully or partially artificial environment that may be viewed, which may be three dimensional;
"virtual visual scene" refers to a representation of the virtual visual space viewed from a particular point of view within the virtual visual space;
virtual visual object' is a visible virtual object within a virtual visual scene;
"sound space" (or "virtual sound space") refers to an arrangement of sound sources in a three-dimensional space. A sound space may be defined in relation to recording sounds (a recorded sound space) and in relation to rendering sounds (a rendered sound space);
"sound scene" (or "virtual sound scene") refers to a representation of the sound space listened to from a particular point of view within the sound space;
"sound object" refers to sound source that may be located within the sound space. A source sound object represents a sound source within the sound space, in contrast to a sound source associated with an object in the virtual visual space. A recorded sound object represents sounds recorded at a particular microphone or position. A rendered sound object represents sounds rendered from a particular position;
"virtual space" may mean a virtual visual space, mean a sound space or mean a combination of a virtual visual space and corresponding sound space. In some examples, the virtual space may extend horizontally up to 360° and may extend vertically up to 180°;
"virtual scene" may mean a virtual visual scene, mean a sound scene or mean a combination of a virtual visual scene and corresponding sound scene;
virtual object' is an object within a virtual scene, it may be an artificial virtual object (e.g. a computer-generated virtual object) or it may be an image of a real object in a real space that is live or recorded. It may be a sound object and/or a virtual visual object;
"virtual position" is a position within a virtual space. It may be defined using a virtual location and/or a virtual orientation. It may be considered to be a movable 'point of view'.
"correspondence" or "corresponding" when used in relation to a sound space and a virtual visual space means that the sound space and virtual visual space are time and space aligned, that is they are the same space at the same time;
"correspondence" or "corresponding" when used in relation to a sound scene and a virtual visual scene (or visual scene) means that the sound space and virtual visual space (or visual scene) are corresponding and a notional (virtual) listener whose point of view defines the sound scene and a notional (virtual) viewer whose point of view defines the virtual visual scene (or visual scene) are at the same location and orientation, that is they have the same point of view (same virtual position);
"real space" (or "physical space") refers to a real environment, which may be three dimensional;
"real scene" refers to a representation of the real space from a particular point of view within the real space;
"real visual scene" refers to a representation of the real space viewed from a particular point of view within the real space;
"mediated reality" in this document refers to a user visually experiencing a fully or partially artificial environment (a virtual space) as a virtual scene at least partially rendered by an apparatus to a user. The virtual scene is determined by a point of view within the virtual space. Displaying the virtual scene means providing it in a form that can be perceived by the user;
"augmented reality" in this document refers to a form of mediated reality in which a user experiences a partially artificial environment (a virtual space) as a virtual scene comprising a real scene of a physical real world environment (real space) supplemented by one or more visual or audio elements rendered by an apparatus to a user. The term augmented reality implies a mixed reality or hybrid reality and does not necessarily imply the degree of virtuality (vs reality) or the degree of mediality;
"virtual reality" in this document refers to a form of mediated reality in which a user experiences a fully artificial environment (a virtual visual space) as a virtual scene displayed by an apparatus to a user;
"virtual content" is content, additional to real content from a real scene, if any, that enables mediated reality by, for example, providing one or more artificial virtual objects;
"mediated reality content" is content which enables a user to visually experience a fully or partially artificial environment (a virtual space) as a virtual visual scene. Mediated reality content could include interactive content such as a video game or non-interactive content such as motion video;
"augmented reality content" is a form of mediated reality content which enables a user to visually experience a partially artificial environment (a virtual space) as a virtual visual scene. Augmented reality content could include interactive content such as a video game or non-interactive content such as motion video;
"virtual reality content" is a form of mediated reality content which enables a user to visually experience a fully artificial environment (a virtual space) as a virtual visual scene. Virtual reality content could include interactive content such as a video game or non-interactive content such as motion video;
"perspective-mediated" as applied to mediated reality, augmented reality or virtual reality means that user actions determine the point of view within the virtual space, changing the virtual scene;
"first person perspective-mediated" as applied to mediated reality, augmented reality or virtual reality means perspective mediated with the additional constraint that the user's real point of view (location and/or orientation) determines the point of view within the virtual space;
"third person perspective-mediated" as applied to mediated reality, augmented reality or virtual reality means perspective mediated with the additional constraint that the user's real point of view does not determine the point of view within the virtual space;
"user interactive" as applied to mediated reality, augmented reality or virtual reality means that user actions at least partially determine what happens within the virtual space;
"displaying" means providing in a form that is perceived visually (viewed) by the user. "rendering" means providing in a form that is perceived by the user
"notional listener" defines the point of view in virtual space used to generate a perspective-mediated sound scene, irrespective of whether or not a user is actually listening;
"notional viewer" defines the point of view in virtual space used to generate a perspective-mediated visual scene, irrespective of whether or not a user is actually viewing.

### DESCRIPTION

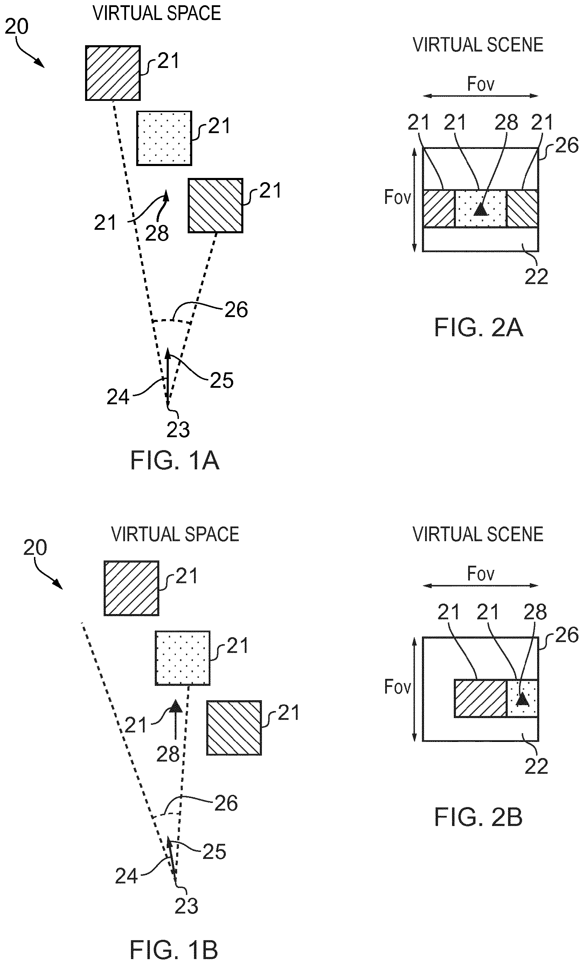

Figs 1A-1C and 2A-2C illustrate examples of mediated reality. The mediated reality may be augmented reality or virtual reality.

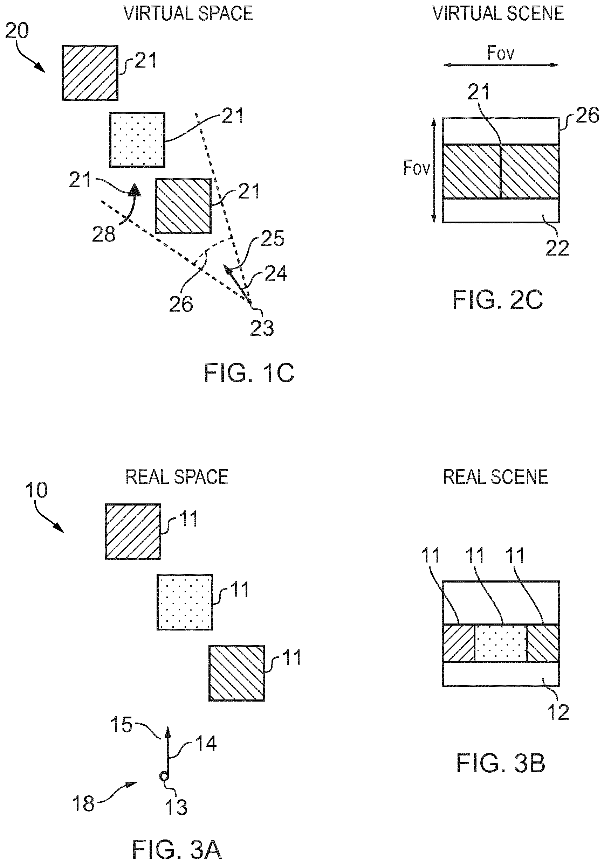

Figs 1A, 1B, 1C illustrate the same virtual visual space 20 comprising the same virtual visual objects 21, however, each fig illustrates a different virtual point of view 24 of a user. The virtual location 23 and virtual direction 25 of a virtual point of view 24 of the user can change independently. The direction 25 but not the location 23 of the virtual point of view 24 of the user changes from Fig 1A to Fig 1B. The direction 25 and the location 23 of the virtual point of view 24 of the user changes from fig 1B to fig 1C.

Figs 2A, 2B, 2C illustrate a virtual visual scene 22 from the perspective of the different virtual points of view 24 of the user of respective figs 1A, 1B, 1C. The virtual visual scene 22 is determined by the virtual point of view 24 of the user within the virtual visual space 20 and a field of view 26. The virtual visual scene 22 is at least partially displayed to the user.

The virtual visual scenes 22 illustrated may be mediated reality scenes, virtual reality scenes or augmented reality scenes. A virtual reality scene displays a fully artificial virtual visual space 20. An augmented reality scene displays a partially artificial, partially real virtual visual space 20.

The mediated reality, augmented reality or virtual reality may be user interactive-mediated. In this case, user actions at least partially determine what happens within the virtual visual space 20. This may enable interaction with a virtual object 21 such as a visual element 28 within the virtual visual space 20. For example, the user may be able to select and move the virtual object 21.

The mediated reality, augmented reality or virtual reality may be perspective-mediated. In this case, user actions determine the virtual point of view 24 of the user within the virtual visual space 20, changing the virtual visual scene 22. For example, as illustrated in figs 1A, 1B, 1C a virtual location 23 of the virtual point of view 24 of the user within the virtual visual space 20 may be changed and/or a direction or orientation 25 of the virtual point of view 24 of the user 18 within the virtual visual space 20 may be changed. If the virtual visual space 20 is three-dimensional, the virtual location 23 of the virtual point of view 24 of the user has three degrees of freedom (e.g. up/down, forward/back, left/right) and the direction 25 of the virtual point of view 24 of the user within the virtual visual space 20 has three degrees of freedom (e.g. roll, pitch, yaw). The virtual point of view 24 of the user may be continuously variable in virtual location 23 and/or direction 25 and user action then changes the location and/or direction of the virtual point of view 24 of the user continuously. Alternatively, the virtual point of view 24 of the user may have discrete quantised locations 23 and/or discrete quantised directions 25 and user action switches by discretely jumping between the allowed locations 23 and/or directions 25 of the virtual point of view 24 of the user.

Fig 3A illustrates an example of a real space 10 comprising real objects 11 that partially correspond with the virtual visual space 20 of Fig 1A. In this example, each real object 11 in the real space 10 has a corresponding virtual object 21 in the virtual visual space 20, however, each virtual object 21 in the virtual visual space 20 does not have a corresponding real object 11 in the real space 10. In this example, one of the virtual objects 21, the computer-generated visual element 28, is an artificial virtual object 21 that does not have a corresponding real object 11 in the real space 10.

A linear mapping may exist between the real space 10 and the virtual visual space 20 and the same mapping exists between each real object 11 in the real space 10 and its corresponding virtual object 21. The relative relationship of the real objects 11 in the real space 10 is therefore the same as the relative relationship between the corresponding virtual objects 21 in the virtual visual space 20.

Fig 3B illustrates an example of a real visual scene 12 that partially corresponds with the virtual visual scene 22 of Fig 1A, it includes real objects 11 but not artificial virtual objects. The real visual scene is from a point of view 14 corresponding to the virtual point of view 24 of the user in the virtual visual space 20 of Fig 1A. The real visual scene content is determined by that corresponding virtual point of view 24 of the user and the field of view 26 in virtual space 20 (point of view 14 in real space 10).

Fig 2A may be an illustration of an augmented reality version of the real visual scene 12 illustrated in Fig 3B. The virtual visual scene 22 comprises the real visual scene 12 of the real space 10 supplemented by one or more visual elements 28 displayed by an apparatus to the user. The visual elements 28 may be a computer-generated visual element. In a see-through arrangement, the virtual visual scene 22 comprises the actual real visual scene 12 which is seen through a display of the supplemental visual element(s) 28. In a see-video arrangement, the virtual visual scene 22 comprises a displayed real visual scene 12 and displayed supplemental visual element(s) 28. The displayed real visual scene 12 may be based on an image from a single virtual point of view 24 of the user or on multiple images from different points of view at the same time, processed to generate an image from a single virtual point of view 24 of the user.

In augmented reality, the virtual content 28 is one or more virtual objects 21. The virtual scene 22 comprises the real scene 12, augmented or not by virtual content in dependence upon the virtual point of view 24 of the user 18.

In virtual reality, the virtual content 28 is the whole of the virtual scene and all virtual objects 21 within it. The virtual scene 22 comprises only the virtual content 28 determined in dependence upon the virtual point of view 24 of the user.

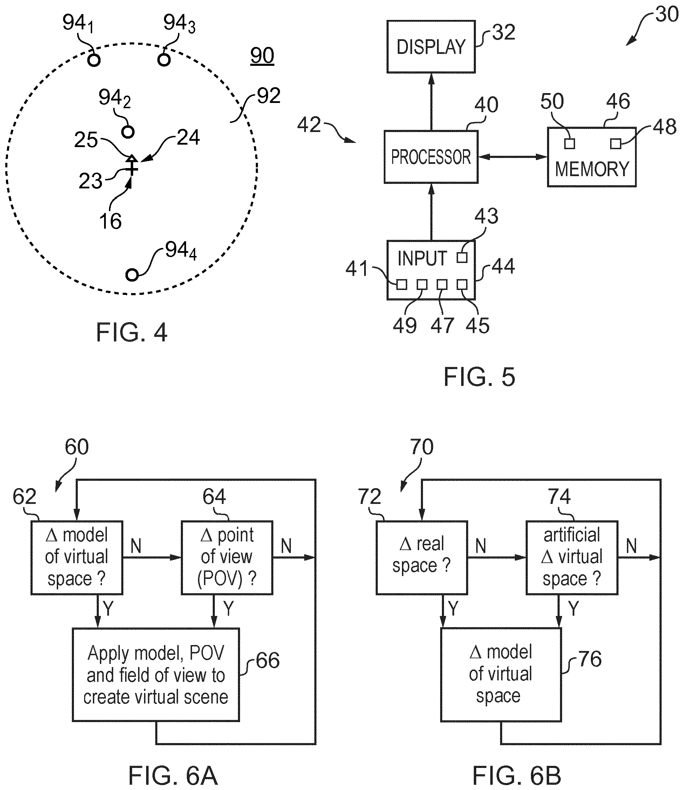

Fig. 4 illustrates, from a top perspective, an example of a sound space 90 that corresponds to the virtual visual space 20. Fig. 4 is a two-dimensional projection or cross-section of the three-dimensional sound space 90. The sound space 90 defines a sound scene 92.

In some but not necessarily all examples, the virtual visual space 20 and the sound space 90 may be corresponding and form a combined virtual space 90, 20. "Correspondence" or "corresponding" when used in relation to a sound space and a virtual visual space means that the sound space 90 and virtual visual space 20 are time and space aligned as combined virtual space 90, 20, that is they are the same space at the same time.

The correspondence between virtual visual space 20 and sound space 90 results in correspondence between the virtual visual scene 22 and the sound scene 92 to form a combined virtual scene 92, 22. "Correspondence" or "corresponding" when used in relation to a sound scene 92 and a virtual visual scene 22 means that the sound space 90 and virtual visual space 20 are corresponding and a notional listener (user) whose point of view defines the sound scene 92 and a notional viewer (user) whose point of view defines the virtual visual scene 22 are at the same location and orientation, that is they are the same virtual point of view 24 of the same user.

In Fig. 4, the sound space 90 and the virtual visual space 20 form a combined virtual space 90, 20. The sound space 90 is an arrangement of sound sources 94 in a three-dimensional space. In this example, the sound space 90 is a rendered sound space and the sound sources 94 comprise sound objects.

The sound space 90 defines a sound scene 92 that corresponds to the virtual visual scene 22. The sound scene 92 and the virtual visual scene 22 form a combined virtual scene 92, 22. The sound scene 92 is a representation of the sound space 90 listened to from a particular virtual point of view 24 of the user 18 within the sound space 90. The sound scene 92 is first person perspective-mediated. The user's real point of view 14 determines the virtual point of view 24 within the sound space, changing the sound scene 92.

In this example, the virtual point of view 24 of the user 18 within the sound space 90 corresponds to the virtual point of view 24 of the user 18 within the virtual visual space 20 and the same label is used. The virtual scene 92, 22 is first person perspective-mediated. The user's real point of view 14 determines the virtual point of view 24 within the combined virtual space 90, 20, changing the combined virtual scene 92, 22.

Correspondence in this sense means that there is a one-to-one mapping between the sound space 90 and the virtual visual space 20 such that a position in the sound space 90 has a corresponding position in the virtual visual space 20 and a position in the virtual visual space 20 has a corresponding position in the sound space 90. Correspondence in this sense means that there is a one-to-one mapping between the sound scene 92 and the virtual visual scene 22 such that a position in the sound scene 92 has a corresponding position in the virtual visual scene 22 and a position in the virtual visual scene 22 has a corresponding position in the sound scene 92. Corresponding also means that the coordinate system of the sound space 90/sound scene 92 and the coordinate system of the virtual visual space 20/virtual visual scene 22 are in register such that an object is positioned as a sound object in the sound scene and as a visual object in the visual scene at the same common position from the perspective of the user 18.

In this illustrated example, the user actions determine the virtual point of view 24 of the user 18 within the sound space 90 (and virtual visual space 20), changing the sound scene 92 and the virtual visual scene 22 simultaneously. For example, a virtual location 23 of the virtual point of view 24 of the user 18 within the virtual space 92, 20 may be changed and/or a direction or orientation 25 of the virtual point of view 24 of the user 18 within the virtual space 92, 20 may be changed. If the virtual space 92, 20 is three-dimensional, the virtual location 23 of the virtual point of view 24 of the user 18 has three degrees of freedom e.g. up/down, forward/back, left/right and the direction 25 of the virtual point of view 24 of the user 18 within the virtual visual space 20 has three degrees of freedom e.g. roll, pitch, yaw. The virtual point of view 24 of the user 18 may be continuously variable in virtual location 23 and/or direction 25 and user action then changes the location and/or direction of the virtual point of view 24 of the user 18 continuously. Alternatively, the virtual point of view 24 of the user 18 may have discrete quantised locations 23 and/or discrete quantised directions 25 and user action switches by discretely jumping between the allowed locations 23 and/or directions 25 of the virtual point of view 24 of the user.

The functionality that enables control of a virtual visual space 20 and the virtual visual scene 26 dependent upon the virtual visual space 20 and the functionality that enables control of a sound space and the sound scene 92 dependent upon the sound space 90 may be provided by the same apparatus, system, method or computer program.

Fig. 5 illustrates an example of an apparatus 30 that is operable to enable mediated reality and/or augmented reality and/or virtual reality.

The apparatus 30 comprises a rendering device or devices 32, which may render information to a user visually via a display, aurally via one or more audio outputs 32, for example via loudspeakers, and/or haptically via a haptic device.

The audio output device 32 may comprise one or more spatially distributed audio sources. For example, binaural loudspeakers may be separated in a head mounted audio (HMA) device, loudspeakers may be spatially separated in a sound bar or in a distributed loudspeaker arrangement e.g. 5.1 or 7.1 surround sound.

The display 32 is for providing at least parts of the virtual visual scene 22 to a user 18 in a form that is perceived visually by the user 18. The display 32 may be a visual display that provides light that displays at least parts of the virtual visual scene 22 to a user 18. Examples of visual displays include liquid crystal displays, organic light emitting displays, emissive, reflective, transmissive and transflective displays, direct retina projection display, near eye displays etc. The display 32 may be a head-mounted display (HMD), a hand-portable display or television display or some other display.

The rendering device or devices 32 are controlled in this example but not necessarily all examples by a controller 42.

Implementation of a controller 42 may be as controller circuitry. The controller 42 may be implemented in hardware alone, have certain aspects in software including firmware alone or can be a combination of hardware and software (including firmware).

As illustrated in fig. 5 the controller 42 may comprise a processor 40 configured to load computer program instructions 48 from a memory 46. The controller 42 may be implemented using instructions that enable hardware functionality, for example, by using executable computer program instructions 48 in a general-purpose or special-purpose processor 40 that may be stored on a computer readable storage medium (disk, memory etc.) to be executed by such a processor 40.

The processor 40 is configured to read from and write to the memory 46. The processor 40 may also comprise an output interface via which data and/or commands are output by the processor 40 and an input interface via which data and/or commands are input to the processor 40.

The memory 46 stores at least a computer program 48 comprising computer program instructions (computer program code) that controls the operation of the apparatus 30 when loaded into the processor 40. The computer program instructions, of the computer program 48, provide the logic and routines that enables the apparatus to perform at least the methods illustrated in Figs 6A & 6B. The processor 40 by reading the memory 46 is able to load and execute the computer program 48.

The apparatus 30 may enable user-interactive mediation for mediated reality and/or augmented reality and/or virtual reality. The input circuitry 44 tracks (detects over time) user actions using user input 43. These user actions are used by the controller 42 to determine what happens within the virtual space. This may enable interaction with a visual element 28 within the virtual visual space 20.

The apparatus 30 may enable perspective mediation for mediated reality and/or augmented reality and/or virtual reality. The input circuitry 44 tracks (detects over time) user actions. These user actions are used by the controller 42 to determine the virtual point of view 24 of the user 18 within the virtual space, changing the virtual scene. The virtual point of view 24 of the user 18 may be continuously variable in location and/or direction and user action changes the location and/or direction of the virtual point of view 24 of the user 18. Alternatively, the virtual point of view 24 of the user 18 may have discrete quantised locations and/or discrete quantised directions and user action switches by jumping to the next location and/or direction of the virtual point of view 24 of the user 18.

The apparatus 30 may enable first person perspective for mediated reality, augmented reality or virtual reality. The input circuitry 44 detects the user's real point of view 14 using point of view sensor 45. The user's real point of view is used by the controller 42 to determine his virtual point of view 24 within the virtual space 20, changing the virtual scene 22. Referring back to Fig 3A, a user 18 has a real point of view 14. The real point of view may be changed by the user 18. For example, a real location 13 of the real point of view 14 is the location of the user 18 and can be changed by changing the physical location 13 of the user 18. For example, a real direction 15 of the real point of view 14 is the direction in which the user 18 is looking and can be changed by changing the real direction of the user 18. The real direction 15 may, for example, be changed by a user 18 changing an orientation of their head or view point and/or a user changing a direction of their gaze.

A head-mounted apparatus 30, may be used to enable first-person perspective mediation by measuring a change in location and/or a change in orientation of the user's head and/or a change in the user's direction of gaze. The head-mounted apparatus 30 may, for example, operate as a head mounted audio (HMA) device, a head mounted display (HMD) device or a combined head mounted display and audio (HMDA) device.

In some but not necessarily all examples, the apparatus 30 comprises as part of the input circuitry 44 point of view sensors 45 for determining changes in the real point of view.

For example, positioning technology such as GPS, HAIP (high-accuracy indoor positioning), triangulation (trilateration) by transmitting to multiple receivers and/or receiving from multiple transmitters, acceleration detection and integration may be used to determine a new physical location 13 of the user 18 and real point of view 14.

For example, accelerometers, electronic gyroscopes or electronic compasses may be used to determine a change in an orientation of a user's head or view point and a consequential change in the real direction 15 of the real point of view 14.

For example, pupil tracking technology, based for example on computer vision, may be used to track movement of a user's eye or eyes and therefore determine a direction of a user's gaze and consequential changes in the real direction 15 of the real point of view 14.

The apparatus 30 may comprise as part of the input circuitry 44 image sensors 47 for imaging the real space 10.

An example of an image sensor 47 is a digital image sensor that is configured to operate as a camera. Such a camera may be operated to record static images and/or video images. In some, but not necessarily all embodiments, cameras may be configured in a stereoscopic or other spatially distributed arrangement so that the real space 10 is viewed from different perspectives. This may enable the creation of a three-dimensional image and/or processing to establish depth, for example, via the parallax effect.

In some, but not necessarily all embodiments, the input circuitry 44 comprises depth sensors 49. A depth sensor 49 may comprise a transmitter and a receiver. The transmitter transmits a signal (for example, a signal a human cannot sense such as ultrasound or infrared light) and the receiver receives the reflected signal. Using a single transmitter and a single receiver some depth information may be achieved via measuring the time of flight from transmission to reception. Better resolution may be achieved by using more transmitters and/or more receivers (spatial diversity). In one example, the transmitter is configured to 'paint' the real space 10 with structured light, preferably invisible light such as infrared light, with a spatially dependent pattern. Detection of a certain pattern by the receiver allows the real space 10 to be spatially resolved. The distance to the spatially resolved portion of the real space 10 may be determined by time of flight and/or stereoscopy (if the receiver is in a stereoscopic position relative to the transmitter).

In some but not necessarily all embodiments, the input circuitry 44 may comprise communication circuitry 41 in addition to or as an alternative to one or more of the image sensors 47 and the depth sensors 49. Such communication circuitry 41 may communicate with one or more remote image sensors 47 in the real space 10 and/or with remote depth sensors 49 in the real space 10.

The apparatus 30 may enable mediated reality and/or augmented reality and/or virtual reality, for example using the method 60 illustrated in Fig 6A or a similar method. The controller 42 stores and maintains a model 50 of the virtual space 20 including a mapping between the physical space 10 and the virtual space 10.

The model may be provided to the controller 42 or determined by the controller 42. For example, sensors in input circuitry 44 may optionally be used to create overlapping depth maps of the real space from different points of view, virtual content is added, to produce and change the model.

Each real location 13 in the physical space 10, through the mapping, has a corresponding virtual location 23 in the virtual space 20 and vice versa. Each real orientation 15 in the physical space 10, through the mapping, has a corresponding virtual orientation 25 in the virtual space 20 and vice versa.

There are many different technologies that may be used to create a depth map. An example of a passive system, used in the Kinect ™ device, is when an object is painted with a non-homogenous pattern of symbols using infrared light and the reflected light is measured using multiple cameras and then processed, using the parallax effect, to determine a location of the object.

At block 62 it is determined whether or not the model of the virtual space 20 has changed. If the model of the virtual visual space 20 has changed the method moves to block 66. If the model of the virtual visual space 20 has not changed the method moves to block 64.

At block 64 it is determined whether or not the virtual point of view 24 of the user 18 in the virtual visual space 20 has changed. If the virtual point of view 24 of the user 18 has changed the method moves to block 66. If the virtual point of view 24 of the user 18 has not changed the method returns to block 62.

At block 66, a two-dimensional projection of the three-dimensional virtual visual space 20 is taken from the virtual location 23 and in the direction 25 defined by the current virtual point of view 24 of the user 18. The projection is limited by the field of view 26 to produce the virtual visual scene 22. The projection may also define the sound scene. The method then returns to block 62.

Fig 6B illustrates an example of a method 70 for updating a model of the virtual visual space 20 for augmented reality. Where the apparatus 30 enables augmented reality, the virtual visual space 20 comprises objects 11 from the real space 10 and also visual elements 28 not present in the real space 10. The combination of such visual elements 28 may be referred to as the artificial virtual visual space.

At block 72 it is determined whether or not the real space 10 has changed. If the real space 10 has changed the method moves to block 76. If the real space 10 has not changed the method moves to block 74. Detecting a change in the real space 10 may be achieved at a pixel level using differencing and may be achieved at an object level using computer vision to track objects as they move.

At block 74 it is determined whether or not the artificial virtual visual space has changed. If the artificial virtual visual space has changed the method moves to block 76. If the artificial virtual visual space has not changed the method returns to block 72. As the artificial virtual visual space is generated by the controller 42 changes to the visual elements 28 are easily detected.

At block 76, the model of the virtual visual space 20 is updated.

The blocks illustrated in Figs 6A & 6B may represent steps in a method and/or sections of code in the computer program 48. The illustration of a particular order to the blocks does not necessarily imply that there is a required or preferred order for the blocks and the order and arrangement of the block may be varied. Furthermore, it may be possible for some blocks to be omitted.

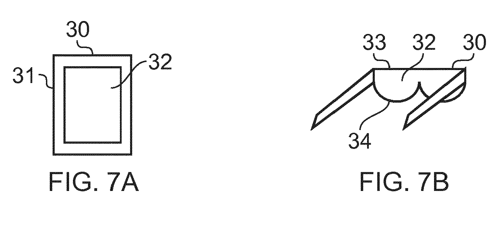

Figs 7A and 7B illustrate examples of apparatus 30 that enable display of at least parts of the virtual visual scene 22 to a user and rendering of audio to a user.

Fig 7A illustrates a handheld apparatus 31 comprising a display screen as display 32 that displays images to a user and is used for displaying the virtual visual scene 22 to the user 18. The apparatus 30 may be moved deliberately in the hands of the user 18 in one or more of the previously mentioned six degrees of freedom. The handheld apparatus 31 may house the sensors 45 for determining changes in the real point of view from a change in orientation of the apparatus 30. The handheld apparatus 31 may house the sensors 45 for determining changes in the real point of view from a change in a user controlled device such as, for example, actuation of buttons, virtual buttons, slider, joystick, etc. The handheld apparatus 31 may be or may be operated as a see-video arrangement for augmented reality that enables a live or recorded video of a real visual scene 12 to be displayed on the display 32 for viewing by the user 18 while one or more visual elements 28 are simultaneously displayed on the display 32 for viewing by the user 18. The combination of the displayed real visual scene 12 and displayed one or more visual elements 28 provides the virtual visual scene 22 to the user 18.

If the handheld apparatus 31 has a camera mounted on a face opposite the display 32, it may be operated as a see-video arrangement that enables a live real visual scene 12 to be viewed while one or more visual elements 28 are displayed to the user 18 to provide in combination the virtual visual scene 22.

Fig 7B illustrates a head-mounted apparatus 33 comprising a display 32 and/or audio output 32 that renders content to a user 18. The head-mounted apparatus 33 may be moved automatically when a head of the user 18 moves.

A head-mounted apparatus 33 comprising a display 32 may be referred to as a head-mounted display (HMD) device.

A head-mounted apparatus 33 comprising an audio output 32 (e.g. a loudspeaker) may be referred to as a head-mounted audio (HMA) device.

The head-mounted apparatus 33 may house the sensors 44 (not illustrated) for point of view detection that detect a location and orientation of the apparatus 33 or an orientation of the apparatus 33.

The head-mounted apparatus 33 may house the sensors 45 (not illustrated) for gaze direction detection and/or selection gesture detection.

The head-mounted apparatus 33 may be a see-through HMD arrangement for augmented reality that enables a live real visual scene 12 to be viewed while one or more visual elements 28 are displayed by the display 32 to the user 18 to provide in combination the virtual visual scene 22. In this case a visor 34, if present, is transparent or semi-transparent so that the live real visual scene 12 can be viewed through the visor 34.

The head-mounted apparatus 33 may be operated as a see-video arrangement for augmented reality that enables a live or recorded video of a real visual scene 12 to be displayed by the display 32 for viewing by the user 18 while one or more visual elements 28 are simultaneously displayed by the display 32 for viewing by the user 18. The combination of the displayed real visual scene 12 and displayed one or more visual elements 28 provides the virtual visual scene 22 to the user 18. In this case a visor 34 is opaque and may be used as display 32.

Referring back to Fig 5, an apparatus 30 may enable user-interactive mediation for mediated reality and/or augmented reality and/or virtual reality. The input circuitry 44 detects user actions using user input 43. These user actions are used by the controller 42 to determine what happens within the virtual visual space 20. This may enable interaction with a visual element 28 within the virtual visual space 20.

The detected user actions may, for example, be gestures performed in the real space 10. Gestures may be detected in a number of ways. For example, depth sensors 49 may be used to detect movement of parts a user 18 and/or or image sensors 47 may be used to detect movement of parts of a user 18 and/or positional/movement sensors attached to a limb of a user 18 may be used to detect movement of the limb. The positional/movement sensors attached to a limb of a user 18 may, for example, be provided in a hand-held controller. Such a hand-held controller might include one or more user actuatable (analog or digital) buttons and/or triggers. A user may provide user input such a hand-held controller by moving the hand-held controller in space and/or by actuating one of more of the buttons or triggers. Examples of such a hand-held controller include the Oculus Touch, the HTC Vive Controller, the PlayStation Move and the Windows Mixed Reality motion controller.

Object tracking may be used to determine when an object or user changes or moves. For example, tracking the object on a large macro-scale allows one to create a frame of reference that moves with the object. That frame of reference can then be used to track time-evolving changes of shape of the object, by using temporal differencing with respect to the object. This can be used to detect small scale human motion such as gestures, hand movement, finger movement, facial movement. These are scene independent user (only) movements relative to the user.

The apparatus 30 may track a plurality of objects and/or points in relation to a user's body, for example one or more joints of the user's body. In some examples, the apparatus 30 may perform full body skeletal tracking of a user's body. In some examples, the apparatus 30 may perform digit tracking of a user's hand.

The tracking of one or more objects and/or points in relation to a user's body may be used by the apparatus 30 in action recognition.

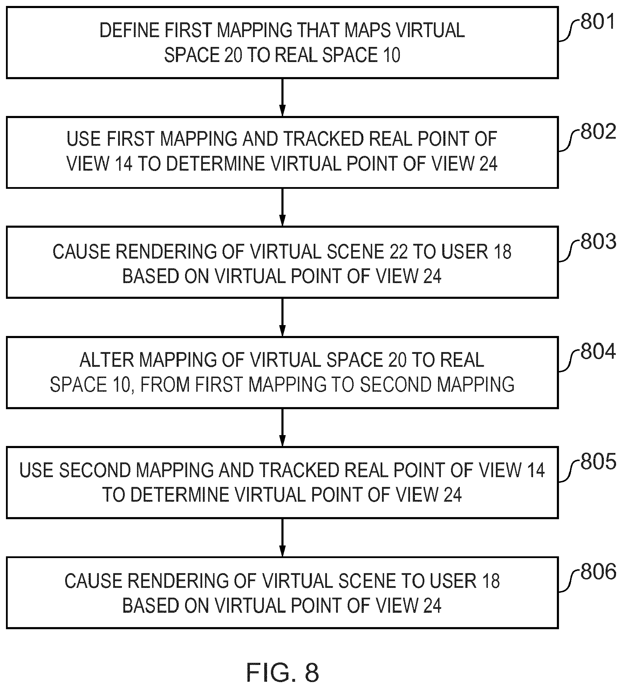

Fig. 8 illustrates a flow chart of a method. In block 801 of fig. 8, a first mapping is defined by the processor 40 that maps virtual space 20 to real space 10. The mapping defines how virtual space 20 is mapped to real space 10. The mapping of virtual space 20 to real space 10 defines how a user's virtual point of view 24 is determined from the user's real point of view 14. That is, the mapping of virtual space 20 to real space 10 defines how the user's virtual location 23 is determined from the user's real location 13, and how the user's virtual orientation 25 is determined from the user's real orientation 15.

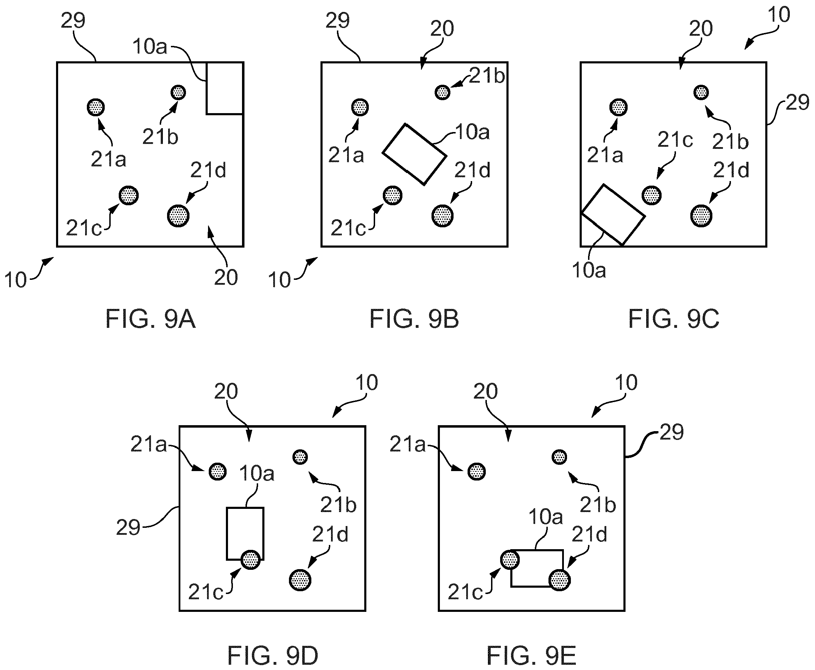

Each of figs. 9A to 9E illustrates an example of virtual space 20 mapping to real space 10. Each figure represents a different mapping. The virtual space 20 has a boundary 29 which is the periphery of the virtual space 20. The illustrated virtual space 20 includes virtual objects 21a-21d, which might include virtual visual objects and/or sound objects.

Virtual space 20 can be considered to be a volume in which each point in virtual space 20 can be defined by a co-ordinate system, such as a Cartesian co-ordinate system in which each point in the virtual space 20 is defined by a point on x, y and z axes. Each point in virtual space 20 might have a corresponding point in real space 10.

In the illustrated examples, a portion/subspace 10a of real space 10 is shown. The portion 10a of real space 10 might be a room, for example. The room 10a might be demarcated by a boundary. The boundary of the room 10a might be defined by one or more immovable objects, such as one or more walls.

It can be seen in Figs 9A to 9E that it is possible to map virtual space 20 to the subspace/room 10a in different ways. In each of Figs 9A to 9E, a different subspace/portion of virtual space 20 corresponds with the subspace/room 10a of real space 10. The location and the orientation of the virtual space 20, relative to the subspace/room 10a, is different in each figure. In each figure, at least some of the virtual space 20 is mapped to real space 10 outside the boundary defining the subspace/room 10a, and at least some of the virtual space 20 is mapped to real space inside the boundary defining the subspace/room 10a.

The user's real point of view 14 is tracked in real space 10 in the manner described above. In block 802 of fig. 8, the first mapping (of virtual space 20 to real space 10) that was defined in block 801 and the tracked user's real point of view 14 are used by the processor 40 to determine a virtual point of view 24 within the virtual space 20. As mentioned above, the user's virtual point of view 24 is defined by the user's virtual location 23 and the user's virtual orientation 25. Said differently, the user's real location 13 and the user's real orientation 15 (which collectively define the user's real point of view 14) are used, along with the first mapping, to determine the user's virtual location 23 and the user's virtual orientation 25 (which collectively define the user's virtual point of view 24) in the virtual space 20.

In block 803 of fig. 8, the processor 40 causes the display 32 to render, to the user 18, at least part of a virtual scene 22 determined by the user's virtual point of view 24 within the virtual space 20, while the virtual space 20 is mapped to the real space 10 using the first mapping.

Once the first mapping that maps the virtual space 20 to real space 10 has been defined in block 801 of fig. 8, the user's real point of view 14 is continuously tracked and the virtual space 20 is continuously rendered to the user 18, as per blocks 802 and 803 in fig. 8.

Embodiments of the present invention enable virtual space 20 to be remapped to real space 10. That is, they enable a change to be made to how points in virtual space 20 correspond with real space 10. When virtual space 20 is remapped to real space 10, at least some points in virtual space 20 correspond with different points in real space 10 than was the case prior to the remapping.

In some embodiments of the invention, the user 18 may be able to travel around (for instance, walk around) a subspace 10a (such as a room) of real space 10 having a boundary. As the user 18 travels around the subspace 10a, the user's real location 13 changes, causes his virtual location 23 to change. Thus, by travelling around the subspace 10a of real space 10, the user 18 is able to travel around (explore) a corresponding subspace of the virtual space 20.

The user 18 may, however, wish to travel to a subspace of the virtual space 20 that corresponds with a subspace of real space 10 which is positioned outside the boundary of the subspace/room 10a in which the user 18 is located. In embodiments of the invention, virtual space 20 is remapped to real space 10 to enable this to happen.

In block 804 of fig. 8, the user 18 performs a grasp and move gesture on a virtual location in the virtual space 10. The mapping of virtual space 20 to real space 10 is altered from the first mapping (defined in block 801) to a second mapping based on the grasp and move gesture.

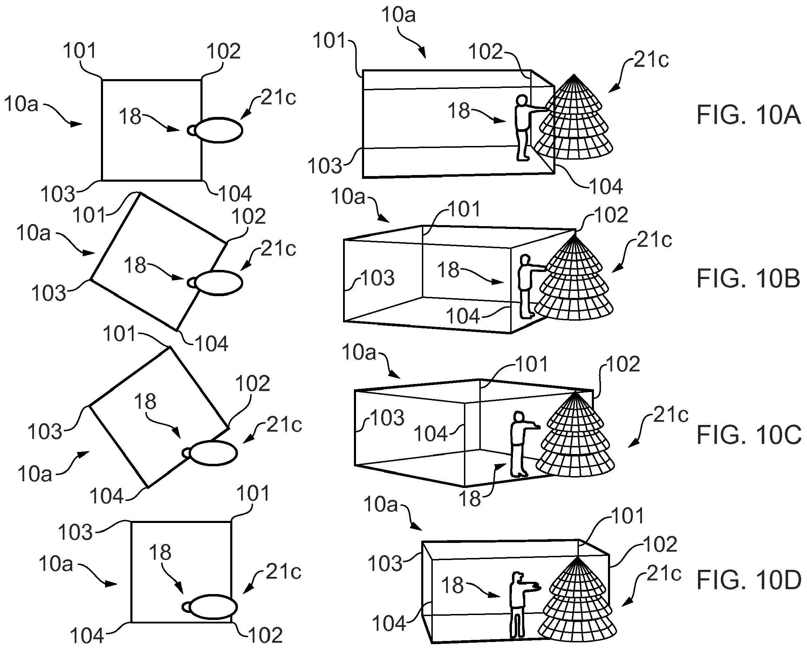

Figs 10A to 10D illustrate the remapping of virtual space 20 to real space 10 taking place as the user 18 performs the grasp and move gesture. The subspace/room 10a of real space 10 in which the user 18 is located is illustrated in figs 10A to 10D. It includes four corners labelled with the reference numerals 101-104. The mapping of virtual space 20 to real space 10 in fig. 10A might, for example, correspond with that illustrated in fig. 9D.

Figures 10A to 10D also illustrate a virtual (visual) object 21c. At least a part of the virtual visual object 21c is mapped to real space 10 within the boundary that defines the subspace/room 10a.

The grasp and move gesture is performed by the user 18 on a virtual location that differs from the user's virtual location 23. As stated above, the user's virtual location 23, along with the user's virtual orientation 25, defines the user's virtual point of view 24. In this example, the grasp and move gesture is performed by the user 18 on the virtual visual object 21c. The grasp and move gesture may be performed by the user 18 with two arms and two hands, or merely one arm and one hand.

If the grasp and move gesture is performed with one arm and one hand, it may comprises the user 18 reaching out with the arm, followed by the user 18 subsequently performing a grasping user input with the hand located at the distal end of that arm, followed by subsequent movement of that user's arm. If the grasp and move gesture is performed with two arms and two hands, the actions described above in relation to one arm and one hand are replicated with the other arm and the other hand of the user 18.

In fig. 10A, the user 18 initiates the grasp and move gesture by reaching out and performing a grasping user input. The grasping user input causes the user to grasp the virtual location on which the grasp and move gesture is performed and, in this example, that virtual location corresponds with a portion of the virtual visual object 21c.

In embodiments in which one or more hand-held controllers are employed, the user 18 might reach out towards the virtual location on which the grasp and move gesture is to be performed and, when the user's hand/a controller is located at that virtual location, actuate a button or trigger on that hand-held controller. The actuation of the button/trigger may be the grasping user input of the grasp and move gesture.

Alternatively, embodiments where user movement is tracked but no hand-held controllers are employed, the user 18 may perform the grasping user input by reaching out towards the virtual location on which the grasp and move gesture is to be performed and, when the user's hand is located at that virtual location, performing a grasping motion with the digits of his hand.

After the user 18 has performed the grasping user input, the user 18 then moves his arm. The movement of the arm may involve the user 18 performing a pulling movement and/or a pushing movement with his arm, as if the user 18 were pulling/pushing the virtual location/the virtual visual object 21a that has been grasped, while the user 18 is grasping it.

In some embodiments, as the user 18 moves his arm(s), virtual space 20 may be simultaneously and continuously remapped to real space 10. That is, as the user 18 gradually moves his arm(s), virtual space 20 is gradually and continuously remapped to real space 10. In other embodiments, virtual space 20 might be remapped to real space 10 in discrete steps as the user 18 gradually moves his arm(s).

The user might be required to maintain the grasping user input (for example, by continuing to hold down the button/trigger on a hand-held controller or maintaining the digits of his hand in a grasping state) while moving his arm, in order to retain a grasp on the virtual location while moving his arm and cause the remapping of virtual space 20 to real space 10 to occur.

If the user 18 stops moving his arm(s), that may cause the processor 40 to pause the remapping of virtual space 20 to real space 10. Further subsequent movement of the arm(s) may cause the remapping of virtual space 20 to real space 10 to recommence.

When the releases his grasp (for example, by releasing a button/trigger on a hand-held controller or releasing a grasp being performed by his digits), the grasp and move gesture ceases. Figs 10B and 10C illustrate the boundary of the subspace/room 10a and the virtual visual object 21c while the grasp and move gesture is being performed and while the virtual space 20 being remapped to real space 10. Fig. 10D illustrates the boundary of the subspace/room 10a and the virtual visual object 21c once the grasp and move gesture is complete.

When the remapping of virtual space 20 to real space 10 from the first mapping to the second mapping takes place, at least some of the virtual space 20 that was previously mapped to real space 10 outside the boundary of the subspace/room 10a in the first mapping is mapped to real space 10 inside the boundary of the subspace/room 10a in the second mapping. Similarly, at least some of the virtual space 20 that was previously mapped to real space 10 inside the boundary of the subspace/room 10a in the first mapping is mapped to real space 10 outside the boundary of the subspace/room 10a in the second mapping.

The second mapping may depend on the magnitude and the direction of the movement of the user's arm(s). That is, the manner in which the virtual space 20 is remapped to the real space 10 may depend on the direction in which the user 18 pulls and/or pushes the virtual location on which the grasp and move gesture is performed, and the magnitude of that pull and/or push.

In the remapping occurs in figs 10A to 10D, the second mapping is a (mere) rotation of the first mapping about the virtual location upon which the grasp and move gesture is performed. In this example, the mapping of virtual space 20 to real space 10 at the virtual location upon which the grasp and move gesture is performed remains unaltered. In figures 10A to 10D, that virtual location is positioned close or at the boundary of the subspace/room 10a, approximately equidistant from the corners labeled with the reference numerals 102 and 104.

It will be appreciated, however, that the second mapping need not be a mere rotation of the first mapping in every instance. It could be a mere translation, or a translation and a rotation for example. The relationship between the second mapping and the first mapping depends on the direction and magnitude of the movement of the user's arm.

In block 805 of fig. 8, the second mapping (of virtual space 20 to real space 10) that was defined in block 804 and the tracked user's real point of view 14 are used by the processor 40 to determine a virtual point of view 24 within the virtual space 20.

In block 806 of fig. 8, the processor 40 causes the display 32 to render, to the user 18, at least part of a virtual scene 22 determined by the user's virtual point of view 24 within the virtual space 20, while the virtual space 20 is mapped to the real space 10 using the second mapping.

Once the second mapping that maps the virtual space 20 to real space 10 has been defined in block 804 of fig. 8, the user's real point of view 14 is continuously tracked and the virtual space 20 is continuously rendered to the user 18, as per blocks 805 and 806 in fig. 8. The processor 40 may continue to uses the second mapping until/unless the user 18 performs another grasp and move gesture to remap the virtual space 20 to real space 10, or remapping occurs for some other reason.

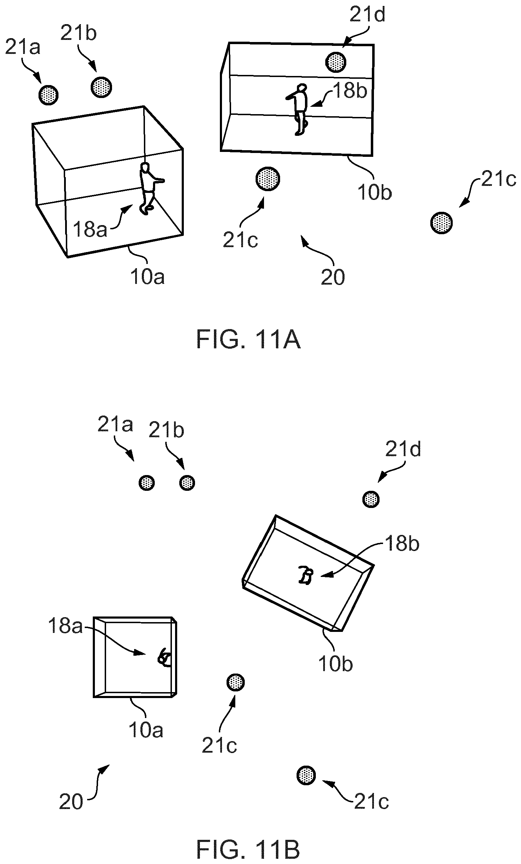

Fig. 11A illustrates a situation in which a first subspace/room 10a of real space 10 and a second subspace/room 10b of real space 10 are mapped to different subspaces of a wider virtual space 20. The virtual space 20 includes a plurality of virtual objects 21a-21e. Fig. 11B illustrates a plan view of fig. 11A.

Figures 11A and 11B illustrate how each room/subspace 10a, 10b is mapped to the virtual space 20. Said differently, the location and orientation of the subspaces/rooms 10a, 10b relative to each other in fig. 11A depends upon how they are mapped to the virtual space 20 and not how they are located/orientated relative to each other in real space 10.

A first user 18a is located in the first subspace/room 10a and a second user 18b is located in the second subspace/room 10b. In this example, the first user 18a can see a virtual representation of the second user 18b by adjusting his virtual point of view (his virtual location and/or virtual orientation) appropriately. Similarly, the second user 18b can see a virtual representation of the first user 18a by adjusting his virtual point of view (his virtual location and/or virtual orientation) appropriately.

It is possible for some indication to be given to one or both of the users 18a, 18b in virtual space 20 as to how each subspace/room 10a, 10b is mapped to virtual space 20, but in many embodiments, this will not be the case. If such an indication is given, an outline of one of or both of the subspaces/rooms 10a, 10b illustrating the mapping might be visible in virtual space 20 to one of or both of the users 18a, 18b.

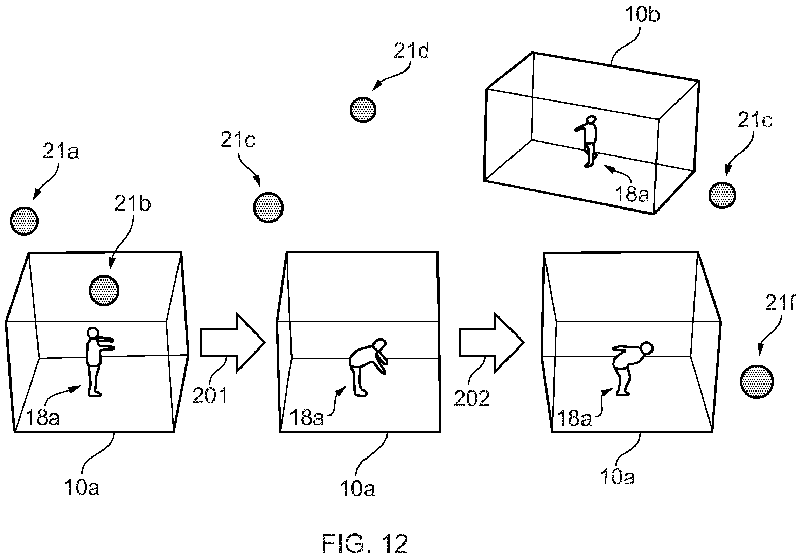

Fig. 12 is a schematic showing an example of virtual space 20 being remapped to the first subspace/room 10a as described above in relation to block 804 in fig. 8. It was mentioned above that remapping might occur as a user moving his arm(s) as part of a grasp and move gesture. It was stated that in some embodiments, virtual space 20 might be simultaneously and continuously remapped to real space 10 as the user moves his arm(s). It was also stated that in other embodiments, virtual space 20 might be remapped to real space in discrete steps as the user 18 gradually moves his arm(s).

When virtual space 20 is remapped to the first subspace/room 10a, the virtual location of the first user 18a located in the first subspace/room 10a changes even though the real location of the first user 18a remains the same during the remapping. A first arrow 201 in fig. 12 illustrates the first user 18a moving across virtual space 20 from a first virtual location to a second virtual location while the grasp and move gesture is being performed and virtual space 20 is being remapped to the real subspace/room 10a. A second arrow 202 in fig. 12 illustrates the first user 18a moving across virtual space 20 from the second virtual location to a third virtual location while the grasp and move gesture continues to be performed and virtual space 20 continues to be remapped to the real subspace/room 10a.

In some embodiments, it might appear to the second user 18b as if the virtual representation of the first user 18a is "skiing" across the virtual space 20 while the remapping occurs and the first user 18a is moving through virtual space 20 (and remaining in the same location in real space 10). This "skiing" virtual representation of the first user 18a might or might not accurately reflect motion that is being performed by the first user 18a in real space 10 (for example, if the grasp and move gesture is being performed by the first user 18a with two arms).

As explained above, the manner in which virtual space 20 is remapped to the first subspace/room 10a might depend upon at least one of a magnitude and a direction of the movement of a user's arm(s) as part of the grasp and move gesture. The direction in which the first user 18a moves across virtual space 20 may depend upon of the direction of the movement (for instance, relative to the user's virtual orientation 25 when the user 18 performs the grasping user input). For example, moving an arm or arms in a particular direction in real space 10 may cause the virtual representation of the first user 18a to move across virtual space 20 in a particular direction. The direction of movement of the virtual representation of the first user 18a in virtual space 20 might be substantially opposite to the direction of the movement of the arm(s) in real space 10.

The extent to which the first user 18a moves across virtual space 20 may depend upon of the magnitude of the movement of the arm(s) (that is, the extent of the movement in real space 20). For example, the greater the magnitude of the movement, the greater the extent of movement of the first user 18a across virtual space 20 might be.

The speed at which the first user 18a moves across virtual space 20 may depend upon of the speed at which the user's arm(s) are moved as part of the grasp and move gesture. For example, the greater the speed of the movement, the greater the speed of movement of the first user 18a across virtual space 20 might be.

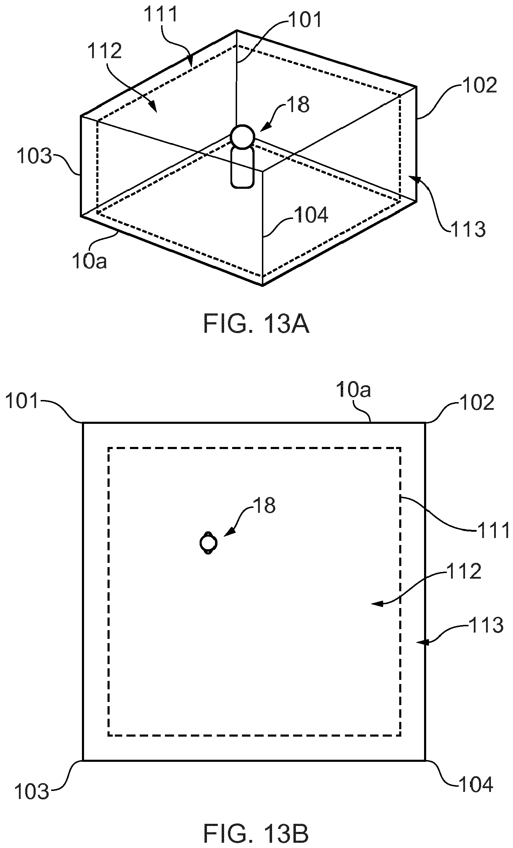

Fig. 13A illustrates a perspective view of a user 18 located in a subspace/room 10a of real space 10. Fig. 13B illustrates a plan view of fig. 13A. The subspace/room 10a includes an inner zone 112 and a peripheral zone 113 separated by dotted lines 111. The inner zone 112 and the peripheral zone 113 are in real space 10. The peripheral zone 113 is on the periphery of, and located within, the subspace/room 10a.

The processor 40 may cause aspects of a virtual scene 22 that are located are in virtual space 20 which is mapped to real space 10 outside the subspace/room 10a to appear differently from aspects of a virtual scene 22 that are located in virtual space 20 which is mapped to the subspace/room 10a. This might occur, for example, when the processor 40 determines that the user 18 is in the peripheral zone 113 or is approaching the peripheral zone 113. This enables the user 18 to clearly differentiate between virtual space 20 that is mapped to the subspace/room 10a and virtual space 20 that is mapped to real space 10 outside the subspace/room 10a.

By way of example, aspects of a virtual scene 22 that are located are in virtual space 20 which is mapped to the subspace/room 10a might be rendered as full three-dimensional content, whereas aspects of the virtual scene 22 that are located are in virtual space 20 which is mapped to real space 10 outside the subspace/room 10a might be rendered as two-dimensional layers, making it visibly distinguishable to the user 18.

The processor 40 may, in some implementations, enable the user 18 to reach into virtual space 20 that is mapped to real space 10 outside the subspace/room 10a by performing a grasp and move gesture in the peripheral zone 113. This might be done, for example, by mapping of a user's actions in real space 10 to virtual space 20 differently in the peripheral zone 113 as compared to the inner zone 112 in order to provide the user's with extended virtual reach.

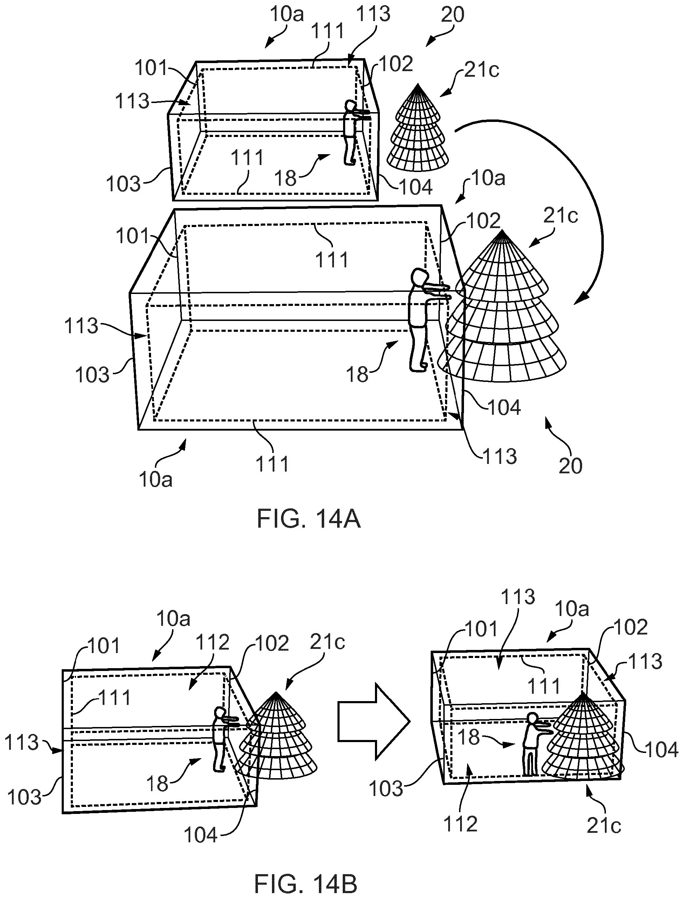

Fig. 14A illustrates a user 18 performing the grasp and move gesture in the peripheral zone 113 of the subspace/room 10a. There is a virtual object 21c, depicted as a virtual tree, in virtual space 20 upon which the grasp and move gesture may be performed by the user 18. The upper illustration in fig. 14A illustrates that the virtual object 21c is positioned at a virtual location that is mapped to real space 10 outside the subspace/room 10a. The lower illustration shows schematically that as the user 18 reaches out and performs the grasping user input of the grasp and move gesture, his reach extends beyond the virtual space 20 that is mapped to the peripheral zone 113 and into virtual space that is mapped to real space 10 outside the subspace/room 10a. This may be depicted in virtual space 20 as the virtual object 21c becoming larger and extending towards the user 18 as shown in the lower illustration of fig. 14A, but other depictions are possible.

In an implementation in which aspects of the virtual scene 22 (that are located in virtual space 20 which is mapped to real space 10 outside the subspace/room 10a) are rendered as two-dimensional layers, (at least part of) the virtual object 21c might be rendered as full three-dimensional content so that it is visually distinguishable from other aspects of the virtual scene 22 mapped to real space 10 outside the subspace/room 10a. It might be, for example, be rendered as full three-dimensional content prior to and during the user 18 reaching out and performing the grasping user input of the grasp and move gesture. Alternatively, (at least part of) the virtual object 21c might transition from being part of a layered two-dimensional presentation to a full three-dimensional presentation in response to the grasping user input being performed on the virtual object 21c, while other aspects of the virtual scene 22 that are local to the virtual object 21c in virtual space 20 (and mapped to real space 10 outside the subspace/room 10a) continue to be presented in two-dimensional layers.

Once the user has grasped the virtual location at which the virtual object 21c is located, the user moves his arm(s) as described above. Fig 14B illustrates the user 18 moving his arm(s), which causes the processor 40 to remap the virtual space 20 to real space 10 in dependence on the movement. The left-hand illustration in fig. 14B shows the user 18 after he has performed the grasping user input and prior to him moving his arm(s). The right-hand illustration in fig. 14B illustrates the position of the virtual object 21c after virtual space 20 has been remapped to real space 10 in response to movement of the user's arm(s). It can be seen in fig. 14B that the virtual object 21c has a virtual location that is mapped to real space 10 outside the subspace/room 10a (see the left-hand illustration in fig. 14B), and that that virtual location is later mapped to real space 10 within the subspace/room 10a after the remapping (see the right-hand illustration in fig. 14B).

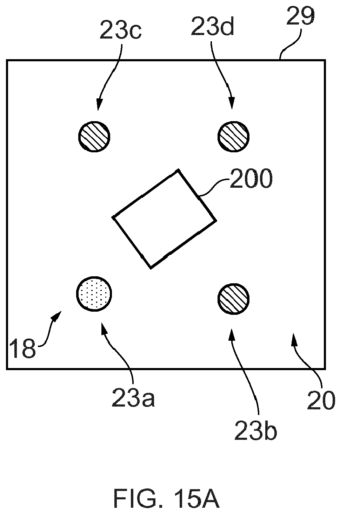

Fig. 15A illustrates a schematic for an implementation in which the real location of the user 18 is not tracked. In this implementation, when the user 18 experiences the virtual space 20 he is sitting or standing still rather than roaming around a subspace/room 10a in the manner described above. The user's location 13 therefore need not be tracked.

There are a plurality of predefined virtual locations 23a-23d from which the user 18 can experience the virtual space 20. That is, there are a plurality of different possible mappings of virtual space 20 to real space 10 and, in each of those mappings, the user's real location 13 (which does not change) is mapped to a different virtual location 23a-23d in virtual space 20. The virtual locations 23a-23d might or might not be within line of sight of one another. The remapping need not be restricted to the user's virtual location transitioning from one virtual location to another virtual location within line of sight.

It might be that the user's real location 13 can only be mapped to a predefined virtual location 23a-23d and not to any other virtual location in the virtual space 20.

In the example illustrated in fig. 15A, the predefined virtual locations 23a-23d are distributed around a zone of interest 200 in the virtual space 20. The user's real location 13 currently corresponds with the virtual location labelled with the reference numeral 23a. The reference numeral 29 denotes the boundary of the virtual space 20.

The user 18 may alter the mapping of virtual space 20 to real space 10 by performing a grasp and move gesture as described above. The remapping of virtual space 20 to real space 10 may depend on the nature of the grasp and move gesture, such as at least one of a magnitude and a direction of the movement of a user's arm(s) as described above. That is, the virtual location 23b-23d to which the user's real location 13 is remapped may depend on the nature of the grasp and move gesture.

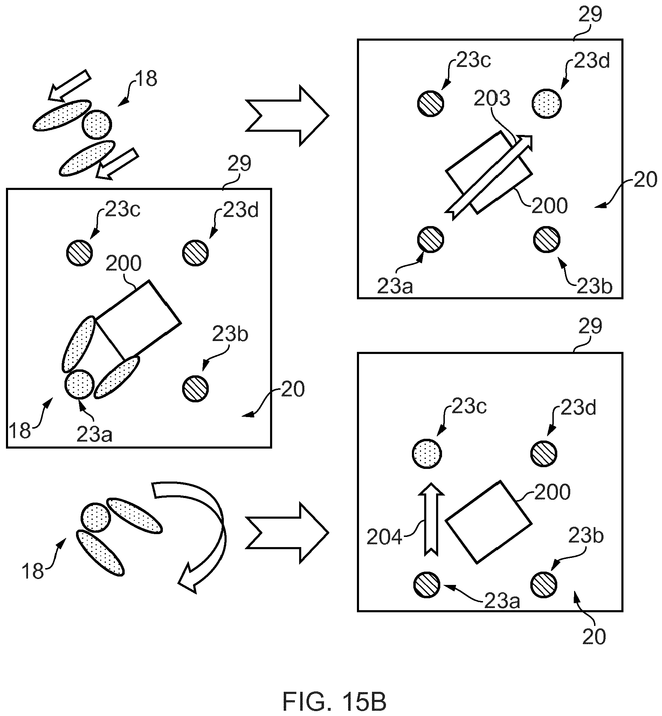

The upper part of fig. 15B illustrates an example in which the user 18 performs a skiing motion to transition from the virtual location labeled with the reference numeral 23a to the virtual location labeled with the reference numeral 23d. The arrow 203 illustrates the movement of the user 18 across virtual space 20.

The lower part of fig. 15B illustrates an example in which the user 18 performs a rotational movement with his arm(s) to transition from the virtual location labeled with the reference numeral 23a to the virtual location labeled with the reference numeral 23c. The arrow 204 illustrates the movement of the user 18 across virtual space 20.

From the foregoing, it will be appreciated that the apparatus 30 can comprise:
at least one processor 40;
memory 46 storing computer program code 48 configured, working with the at least one processor 40, to cause the apparatus 30 to at least:
   define a first mapping that maps a virtual space 20 to a real space 10;
   use a tracked real point of view 14 of a user 18/18a in the real space 10 and the first mapping to determine a virtual point of view 24 of the user 18/18a within the virtual space 20 defined by the user's virtual location and virtual orientation;
   cause rendering to the user 18/18a of at least part of a virtual scene 22 determined by the virtual point of view 24 of the user within the virtual space 20, while the virtual space 20 is mapped to the real space 10 using the first mapping;
   alter, based on a grasp and move gesture performed by the user 18/18a on a virtual location in the virtual space 20 that differs from the virtual location partially defining the user's virtual point of view, the mapping of the virtual space 20 to the real space 10 from the first mapping to a second mapping;
   use a tracked real point of view 14 of the user 18/18a in the real space and the second mapping to determine a virtual point of view 24 of the user 18/18a within the virtual space 20 defined by the user's virtual location and virtual orientation; and
   cause rendering to the user 18/18a of at least part of a virtual scene 22 determined by the virtual point of view 24 of the user 18/18a within the virtual space 20, while the virtual space 20 is mapped to the real space 10 using the second mapping.

The computer program code 48 may arrive at the apparatus 30 via any suitable delivery mechanism. The delivery mechanism may be, for example, a non-transitory computer-readable storage medium, a computer program product, a memory device, a record medium such as a compact disc read-only memory (CD-ROM) or digital versatile disc (DVD), an article of manufacture that tangibly embodies the computer program code 48. The delivery mechanism may be a signal configured to reliably transfer the computer program code 48. The apparatus 30 may propagate or transmit the computer program code 48 as a computer data signal.

Although the memory 46 is illustrated in fig 5 as a single component/circuitry it may be implemented as one or more separate components/circuitry some or all of which may be integrated/removable and/or may provide permanent/semi-permanent/ dynamic/cached storage.

Although the processor 40 is illustrated in fig 5 as a single component/circuitry it may be implemented as one or more separate components/circuitry some or all of which may be integrated/removable. The processor 40 may be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single/multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

The blocks illustrated in figures 6A, 6B and 8 may represent steps in a method and/or sections of code in the computer program code 48. The illustration of a particular order to the blocks does not necessarily imply that there is a required or preferred order for the blocks and the order and arrangement of the block may be varied. Furthermore, it may be possible for some blocks to be omitted.

Where a structural feature has been described, it may be replaced by means for performing one or more of the functions of the structural feature whether that function or those functions are explicitly or implicitly described.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one" or by using "consisting".

In this brief description, reference has been made to various examples. The description of features or functions in relation to an example indicates that those features or functions are present in that example. The use of the term 'example' or 'for example' or 'may' in the text denotes, whether explicitly stated or not, that such features or functions are present in at least the described example, whether described as an example or not, and that they can be, but are not necessarily, present in some of or all other examples. Thus 'example', 'for example' or 'may' refers to a particular instance in a class of examples. A property of the instance can be a property of only that instance or a property of the class or a property of a sub-class of the class that includes some but not all of the instances in the class. It is therefore implicitly disclosed that features described with reference to one example but not with reference to another example, can where possible be used in that other example but does not necessarily have to be used in that other example.

Although embodiments of the present invention have been described in the preceding paragraphs with reference to various examples, it should be appreciated that modifications to the examples given can be made without departing from the scope of the invention as claimed.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

Whilst endeavoring in the foregoing specification to draw attention to those features of the invention believed to be of particular importance it should be understood that the applicant claims protection in respect of any patentable feature or combination of features hereinbefore referred to and/or shown in the drawings whether or not particular emphasis has been placed thereon.

## Claims

1. An apparatus, comprising:
at least one processor;
memory storing computer program code configured, working with the at least one processor, to cause the apparatus to at least:
define a first mapping that maps a virtual space to a real space;
use a tracked real point of view of a user in the real space and the first mapping to determine a virtual point of view of the user within the virtual space defined by the user's virtual location and virtual orientation;
cause rendering to the user of at least part of a virtual scene determined by the virtual point of view of the user within the virtual space, while the virtual space is mapped to the real space using the first mapping;
alter, based on a grasp and move gesture performed by the user on a virtual location in the virtual space that differs from the virtual location partially defining the user's virtual point of view, the mapping of the virtual space to the real space from the first mapping to a second mapping;
use a tracked real point of view of the user in the real space and the second mapping to determine a virtual point of view of the user within the virtual space defined by the user's virtual location and virtual orientation; and
cause rendering to the user of at least part of a virtual scene determined by the virtual point of view of the user within the virtual space, while the virtual space is mapped to the real space using the second mapping.

2. The apparatus of claim 1, wherein the grasp and move gesture comprises a grasping user input followed by movement of at least one arm of the user.

3. The apparatus of claim 2, wherein the second mapping depends upon at least one of a magnitude and a direction of the movement of the at least one arm of the user.

4. The apparatus of claim 2 or 3, wherein the grasping user input causes the user to grasp the virtual location in the virtual space that differs from the virtual location partially defining the user's virtual point of view, and the grasping user input is performed while the virtual space is mapped to the real space using the first mapping.

5. The apparatus of claim 4, wherein the grasping user input is performed by the user on a virtual visual object at the virtual location in the virtual space that differs from the virtual location partially defining the user's virtual point of view, while the virtual space is mapped to the real space using the first mapping.

6. The apparatus of any of the preceding claims, wherein the alteration of the mapping of the virtual space to the real space from the first mapping to the second mapping is performed by moving the virtual space relative to the real space while the user performs the grasp and move gesture,

7. The apparatus of any of the preceding claims, wherein the real space comprises a real space boundary, and wherein some of the virtual space is mapped to real space inside the real space boundary and some of the virtual space is mapped to real space outside the real space boundary.

8. The apparatus of claim 7, when dependent upon claim 5, wherein at least part of the virtual visual object is mapped to real space within the real space boundary.

9. The apparatus of claim 7, when dependent upon claim 5, wherein the virtual visual object is mapped to real space outside the real space boundary.

10. The apparatus of claim 7, 8 or 9, and wherein at least a portion of the virtual space that is mapped to a portion of the real space outside the real space boundary in the first mapping is mapped to a portion of the real space inside the real space boundary in the second mapping.

11. The apparatus of any of the preceding claims, wherein the second mapping is a rotation of the first mapping about the virtual location that differs from the virtual location partially defining the user's virtual point of view.

12. A method, comprising:
defining a first mapping that maps a virtual space to a real space;
using a tracked real point of view of a user in the real space and the first mapping to determine a virtual point of view of a user within the virtual space defined by the user's virtual location and virtual orientation;
causing rendering to the user of at least part of a virtual scene determined by the virtual point of view of the user within the virtual space, while the virtual space is mapped to the real space using the first mapping;
altering, based on a grasp and move gesture performed by the user on a virtual location in the virtual space that differs from the virtual location partially defining the user's virtual point of view, the mapping of the virtual space to the real space from the first mapping to a second mapping;
using a tracked real point of view of the user in the real space and the second mapping to determine a virtual point of view of the user within the virtual space defined by the user's virtual location and virtual orientation; and
causing rendering to the user of at least part of a virtual scene determined by the virtual point of view of the user within the virtual space, while the virtual space is mapped to the real space using the second mapping.

13. The method of claim 12, wherein the grasp and move gesture comprises a grasping user input followed by movement of at least one arm of the user, the grasping user input is performed by the user on a virtual visual object located at the virtual location in the virtual space that differs from the virtual location partially defining the user's virtual point of view, while the virtual space is mapped to the real space using the first mapping, wherein the alteration of the mapping of the virtual space to the real space from the first mapping to the second mapping is performed by moving the virtual space relative to the real space as the user moves the at least one arm, and the second mapping depends upon at least one of a magnitude and a direction of the movement of the at least one arm.

14. The method of claim 13, wherein the visual virtual object is mapped to real space in the first mapping, and the second mapping is a rotation of the first mapping about the virtual location in the virtual space that differs from the virtual location partially defining the user's virtual point of view such that at least part of the mapping of the visual virtual object to real space remains unaltered when the mapping of the virtual space to the real space is altered from the first mapping to the second mapping.

15. Computer program code that, when executed by at least one processor, causes at least the following to be performed:
defining a first mapping that maps a virtual space to a real space;
using a tracked real point of view of a user in the real space and the first mapping to determine a virtual point of view of a user within the virtual space defined by the user's virtual location and virtual orientation;
causing rendering to the user of at least part of a virtual scene determined by the virtual point of view of the user within the virtual space, while the virtual space is mapped to the real space using the first mapping;
altering, based on a grasp and move gesture performed by the user on a virtual location in the virtual space that differs from the virtual location partially defining the user's virtual point of view, the mapping of the virtual space to the real space from the first mapping to a second mapping;
using a tracked real point of view of the user in the real space and the second mapping to determine a virtual point of view of the user within the virtual space defined by the user's virtual location and virtual orientation; and
causing rendering to the user of at least part of a virtual scene determined by the virtual point of view of the user within the virtual space, while the virtual space is mapped to the real space using the second mapping.
